(19) Europäisches Patentamt / European Patent Office / Office européen des brevets

(11) **EP 2 264 931 B1**

(12) **EUROPEAN PATENT SPECIFICATION**

(45) Date of publication and mention
of the grant of the patent:
**25.11.2015 Bulletin 2015/48**

(51) Int Cl.:
**H04L 1/00** (2006.01)

(21) Application number: **09305543.2**

(22) Date of filing: **15.06.2009**

(54) **Improved forward error correction with bit-wise interleaving**

Verbesserte Vorwärtsfehlerkorrektur mit bitweiser Verschachtelung

Correction améliorée d'erreurs sans voie de retour avec entrelacement de manipulation de bits

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**22.12.2010 Bulletin 2010/51**

(73) Proprietor: **ALCATEL LUCENT
92100 Boulogne-Billancourt (FR)**

(72) Inventors:
• **Sayadi, Bessem
92330 Sceaux (FR)**
• **Alloum, Amira
F-92120 MONTROUGE (FR)**

(74) Representative: **ALU Antw Patent Attorneys
Copernicuslaan 50
2018 Antwerpen (BE)**

(56) References cited:
• HEUBERGER A ET AL: "Experimental Validation of Advanced Mobile Broadcasting Waveform in S-Band" ADVANCED SATELLITE MOBILE SYSTEMS, 2008. ASMS 2008. 4TH, IEEE, PISCATAWAY, NJ, USA, 26 August 2008 (2008-08-26), pages 140-148, XP031393745 ISBN: 978-1-4244-2160-2
• DAVID GOZALVEZ ET AL: "Performance evaluation of the MPE-iFEC Sliding RS Encoding for DVB-H streaming services" PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-5, XP031371647 ISBN: 978-1-4244-2643-0
• BESSEM SAYADI ET AL: "Architecture for Real-Time Stream Error Handling in Converged DVB-SH/Cellular Network" GLOBAL TELECOMMUNICATIONS CONFERENCE, 2008. IEEE GLOBECOM 2008. IEEE, IEEE, PISCATAWAY, NJ, USA, 30 November 2008 (2008-11-30), pages 1-5, XP031370233 ISBN: 978-1-4244-2324-8

EP 2 264 931 B1

**Description**

**Field of Invention**

The present invention relates to the field of communication systems, and in particular to the field of error correction schemes for telecommunication systems.

**Background**

Real-world communication networks, whether based on wired or wireless transmission media, are imperfect in the sense that data loss is common. This is due to the fact that the physical communication channels used capture interference from other sources than the intended transmitter, and undergo time-domain variations of the attenuation experienced between a given transmitter and receiver. The latter effect, known as fading, is particularly important in wireless communication.

Data transmission systems and the multimedia services that are transported over them have to be designed to operate correctly over such imperfect networks. For this reason, various error detection and error correction schemes have been devised, which operate at different levels in the protocol stack.

**Summary**

One class of forward error correction (FEC) schemes is known as Reed-Solomon codes, and these operate on the basis of certain mathematical properties of finite fields, in particular Galois fields such as $GF(2^8)$.

In frame or packet based communication systems, such as those covered by the IEEE 802® standards family and the TCP/IP standards family, the effect of error detection and error correction schemes is felt at the level of entire frames or packets. Hence, the detection of one or more uncorrectable errors within a given frame or packet, for example through verification of Cyclic Redundancy Code (CRC), will lead to an invalidation of the entire frame or packet. Typically, an invalidated received frame or packet is not passed on to the higher layers of the protocol stack, such that the entire frame or packet is to be considered lost.

Upper layer FEC solutions are proposed to overcome the losses resilient to physical layer FEC mechanisms, and link layer retransmission schemes. At the receiver side, each packet is considered by the upper layers either completely received or completely lost (erased) based on a CRC (Cyclic Redundancy Check). Accordingly, the FEC decoder encounters a "block erasure channel".

In this context, different upper layer FEC solutions are available in several specifications for different applications. Some solutions are integrated in the application layer above the IP level; these are referred to as Application Layer FEC (denoted by AL-FEC). Others are situated in the link layer below the IP level; these are referred to as Link Layer FEC (denoted by LL-FEC).

The paper "Experimental Validation of Advanced Mobile Broadcasting Waveform in s-Band" by A. Heuberger et al. summarizes the results of the ESA co-funded research project named "ORTIGIA". The scope of the project was to validate experimentally the techniques introduced by the DVB-SH working group to counteract fading in satellite and terrestrial environments. The experiments include measurements both on the field and in the laboratory.

The paper "Performance Evaluation of the MPE-iFEC Sliding RS Encoding for DVB-H Streaming Services" by David Gozálvez et al. studies the performance of the Sliding RS Encoding (SRSE) in the transmission of streaming services in DVB-H networks. The SRSE forms part of a set of specifications called MPE-iFEC which has been recently defined in the DVB-SH standard and is fully compatible with the link layer of DVB-H. MPE-iFED is capable of encoding information related to different datagram bursts in a jointly manner in order to counteract the long signal blockages expected in satellite reception. This is what is usually referred to as Multi-Burst Encoding (MBE) and provides a protection that extends across several time bursts. MBE can also improve the reception in terrestrial networks such as DVB-H, which relay in the use of MPE-FEC for link layer protection. The SRSE employs the same Reed Solomon (RS) algorithm used in MPE-FEC and a sliding encoding mechanism in order to perform MBE. The cited paper evaluates the improvements that the us of SRSE can achieve over the legacy MPE-FEC using vehicular urban field measurements in a DVB-H single frequency network. The effect of the different parameters that regulate the operation of the SRSE are evaluated and the best configurations for its use in DVB-H are highlighted.

It is an object of an embodiment of the invention to reduce the complexity of the error correction facilities of a communication system such as a DVB-SH system by using a binary based decoder.

It is also an object of an embodiment of the invention to improve the performance of the error correction facilities of a communication system such as a DVB-SH system by creating a virtual binary erasure channel.

According to a first aspect of the invention, there is provided a method for generating redundancy information related to data to be transmitted, as specified in claim 1.

According to another aspect of the invention, there is provided a method for correcting erasures in received data, as specified in claim 5.

According to a further aspect of the invention, there is provided a system for using or generating redundancy information related to received or transmitted data, respectively, as specified in claim 8.

Preferred embodiments are stipulated in dependent claims.

Embodiments that do not fall under the scope of the claims are useful to understand the invention.

The steps of the various methods of the present invention are not necessarily carried out in the order in which they are described or depicted.

In one embodiment, a transmitting system according to the present invention comprises a first binary interleaving agent (10) adapted to rearrange transmission data with a single-bit granularity; a second binary interleaving agent (20) adapted to rearrange redundancy information pertaining to the transmission data with a single-bit granularity; and an agent (30) for processing the rearranged data, thereby generating redundancy information pertaining to the rearranged transmission data.

In one embodiment, a receiving system of the present invention comprises a first binary interleaving agent (10) adapted to rearrange reception data with a single-bit granularity; a second binary interleaving agent (20) adapted to rearrange redundancy information pertaining to the reception data with a single-bit granularity; and an agent (30) for processing the rearranged reception data by means of a forward error correction algorithm, thereby using the redundancy information.

In one advantageous embodiment, the forward error correction decoding algorithm is a binary based Reed-Solomon algorithm. In a particular embodiment, said forward error correction decoding algorithm is an adaptive parity check matrix based sum-product algorithm. In another embodiment, the forward error correction algorithm is a Raptor Code algorithm. In yet another embodiment, the forward error correction algorithm is an LDPC code.

In one embodiment, the first interleaving agent (10) applies the following interleaving formula to a table comprising $C$ columns of byte-sized data:

$$c'_i = 8nc_i \bmod (8C - 1) \quad (1)$$

wherein $c'_i$ is the new bit-column number for the bit originally in column $c_i$, and $n$ is a factor denoting the number of byte lengths any given bit will move as a result of the interleaving operation.

In a more particular embodiment, the second interleaving agent (20) applies the following interleaving formula to a table comprising $F$ columns of byte-sized redundancy information:

$$c'_i = 8nc_i \bmod (8F - 1) \quad (2)$$

wherein $c'_i$ is the new bit-column number for the bit originally in column $c_i$, and $n$ is a factor denoting the number of byte lengths any given bit will move as a result of the interleaving operation.

In one embodiment of a system of the present invention, the data pertains to a number of frames.

In a particular embodiment of the system, the communication network is a Digital Video Broadcast network. In other embodiments of the present invention, the communication network may be any kind of Digital Subscriber Line, such as but not limited to ADSL, SHDSL, VDSL, 2BASE-TL, and 10PASS-TS. In still other embodiments of the present invention, the communication network may be an active or a passive optical network, such as but not limited to an EPON or a GPON.

The embodiments described above pertain to transmitting devices as well as receiving devices. Where a transmitting device will generate redundancy information, a receiving device will use received redundancy information to recover lost data by correcting erasures through application of a forward error correction algorithm. To this end, the receiver will apply the same interleaving to the received data as the one applied on the transmitting end to generate the redundancy information. Additionally, the receiver will de-interleave the received redundancy information, by applying a converse rearrangement with respect to the one applied on the transmitting end. Assuming Reed-Solomon coding was used at the transmitter, the receiver can then apply an efficient Reed-Solomon decoding algorithm such as the adaptive parity check matrix based sum-product algorithm to the Reed-Solomon codeword thus obtained.

An important design trade-off is presented by the choice between a better performance in error correction, leading to a better Quality of Service and Quality of Experience for the end user, and a less complex and costly receiver. Embodiments of the present invention are based on the insight that Reed-Solomon codes can efficiently be decoded in a binary representation, for example by using the adaptive parity check matrix based sum-product algorithm proposed by Jiang et al. (J. Jiang and KR Narayanan, "Iterative soft decision decoding of Reed Solomon codes based on adaptive parity check matrices", Proceedings of the International Symposium on Information Theory, 2004). Such an algorithm circumvents the complexity of operations over a finite field, by operating over a sparse graph representation of the binary images of the Reed-Solomon codes. This approach would for example allow for a low-complexity software-based MPE-IFEC decoding solution for DVB-SH. Embodiments of the invention are further based on the insight that the error correction performance provided by such decoders is better when operating on a binary erasure channel than when operating on an equivalent packet or frame erasure channel.

In a frame based communications system, a virtual binary erasure channel system is advantageously achieved by interleaving data belonging to a number of frames or packets on a per-bit basis. This approach ensures that the loss of any frame or packet will not result in the loss of a correspondingly large set of contiguous bits.

In a typical block-based approach, interleaving on a per-bit basis involves storing binary data in a table, and shifting or swapping the positions of individual bit columns. In a special case, the table has a height of one row, and individual bits are shifted or swapped.

In an embodiment of a transmitter according to the present invention, interleaving is applied to a data table with a bit-column granularity, i.e. by treating every byte column as a set of 8 bit columns by expressing each byte in binary form, prior to the application of any forward error correction algorithms. The redundancy bytes resulting from the application of a forward error correction algorithm are again interleaved with a bit-column granularity.

Thus, a loss at the physical layer of an individual datagram burst, which in a system according to the prior art would lead to the loss of complete byte columns in the encoding/decoding tables, will now only lead to the loss of discrete non-adjacent bit columns. This way, a virtual binary erasure channel is obtained, and data recovery by means of a low-complexity binary Reed-Solomon decoding algorithm is made possible.

As it is desirable that any byte column loss be replaced with a number of non-adjacent bit column losses, regardless of whether the lost column represents data or parity information, the invention further provides for a second bit-wise interleaving step, which operates on the obtained parity information before it is provided to the lower layers in columns.

Although operations are carried out on the data at the level of individual bits or bit columns, the skilled person will appreciate that the total number of bits shall typically not be changed by the proposed processing. In particular, assuming an integer number of bytes, the number of bits available for processing would be a multiple of 8, and the result of the processing, expressed as a number of bits, would yield the same multiple of 8. Hence, it is implied that any subsequent processing that may in that case take place at the level of bytes may do so without the need for any explicit regrouping or reassembly process.

By interleaving data belonging to and redundancy information pertaining to multiple frames at the bit level, the present invention provides the advantage of a channel that is a virtual implementation of the concept of a binary erasure channel model, even though the underlying data exchange is frame-oriented.

In this application, we have used and we use the word frame to denote any framed data at the various layers in the protocol stack, including MAC frames, IP packets, datagrams, bursts from a time slicing scheme, and the like.

## Brief Description of the Figures

Some embodiments of apparatus and/or methods in accordance with embodiments of the present invention are now described, by way of example only, and with reference to the accompanying drawings, in which:

Figure 1 presents a model of the prior-art DVB-channel as a virtual BEC;

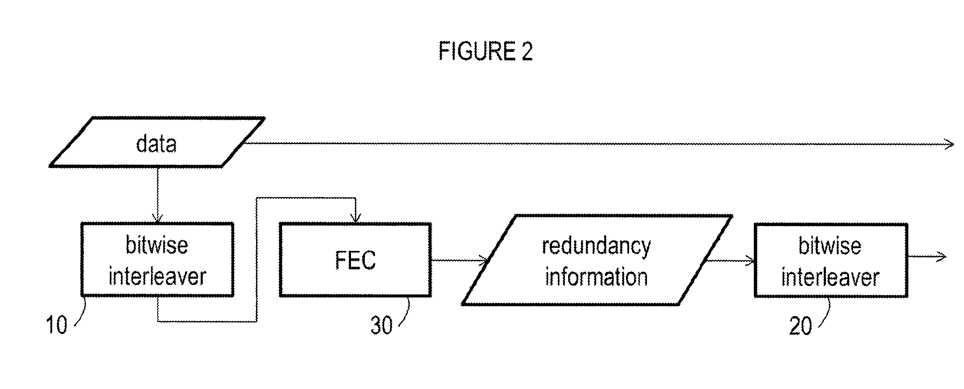

Figure 2 illustrates the structure of a transmitting apparatus according to the present invention;

Figure 3 illustrates the structure of a DVB-SH transmitting system according to the prior art;

Figure 4 illustrates the structure of a DVB-SH transmitting system to which the system according to the present invention is applied;

Figure 5 shows an example of input and output of the expression (1).

Figure 6 presents a flow chart of a method for generating redundancy information according to the present invention.

Figure 7 presents a flow chart of a method for correcting erasures according to the present invention.

**Description of Embodiments**

Digital Video Broadcasting (DVB) standards include upper layer FEC in streaming and file delivery solutions on the application layer, as well as in link layer protocols. One such standard is the DVB-SH specification, which is a mobile broadcast standard designed to deliver IP-based multimedia services (TV content, data delivery, Video-on-Demand) at frequencies below 3 GHz to mobile handsets as well as portable and vehicular devices. It provides universal coverage by combining a Satellite Component (SC) and a Complementary Ground Component (CGC) in a cooperative mode (CGC is also referred to as the Ancillary Terrestrial Component, ATC). The SC ensures a global coverage while CGC provides cellular type coverage. All types of environment (indoor/outdoor, urban/suburban/rural, static/mobile) are addressed.

In order to guarantee a high quality of video service in severely challenging wireless transmission conditions, such as the occurrence of deep fading events or "non line-of-sight" transmission, DVB-SH uses time diversity. This implies spreading the forward error correction code words over a time span that is sufficiently long in relation to the duration of a typical temporary deterioration of the channel conditions. Hence, on the one hand, the error correcting redundancy may be calculated over multiple frames, and, on the other hand, the resulting redundancy information may also be divided over multiple frames. This type of time diversity can be provided by the Multi-Protocol Encapsulation Inter-bursts FEC (MPE-IFEC) scheme.

The MPE-IFEC scheme operates through a specific combination of interleaving and LL-FEC protection. Received datagram bursts are mapped upon $C \times T$ byte matrices denoted as the Application Data Sub-Tables (ADSTs), which are used to column-wise construct the M Application Data Tables (ADTs) which serve as inputs to a parallelized FEC coding process. As the ADTs are constructed by columns, i.e. bytes of a given column with increasing row indices represent temporally adjacent bytes from the original datagram, while the FEC processing is applied row by row, the system provides an inherent byte-based interleaving effect. Furthermore, the ADST to ADT allocation is such that the data pertaining to any particular datagram burst, residing in a single ADST, is spread by individual byte columns over B ADTs, where B is chosen to provide an adequate chance of successful error correction in the event of a loss of a burst. After the encoding, columns from the output tables of the M parallel encoders, the IFEC Data Tables (iFDTs), are again spread by individual byte columns into IFEC sections for transmission in different IFEC bursts, which are combined with the original data bursts to form the actual time slice bursts transmitted on the transmission medium.

The present invention may be embodied in such a way that the sliding principle of the MPE-IFEC scheme is retained and compliance with the architecture and existing implementations of the byte-based MPE-IFEC is maintained.

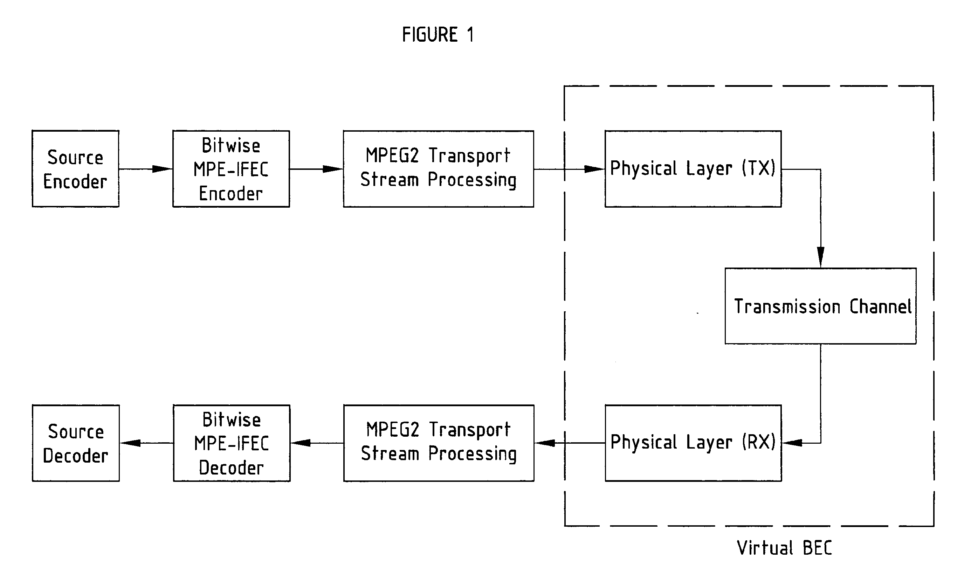

More specifically, the present invention may be applied as an additional part of the MPE-IFEC process in a communication system such as a Digital Video Broadcast system, e.g. a DVB-SH system, to provide a virtual binary erasure channel over an infrastructure with block erasure characteristics (Figure 1).

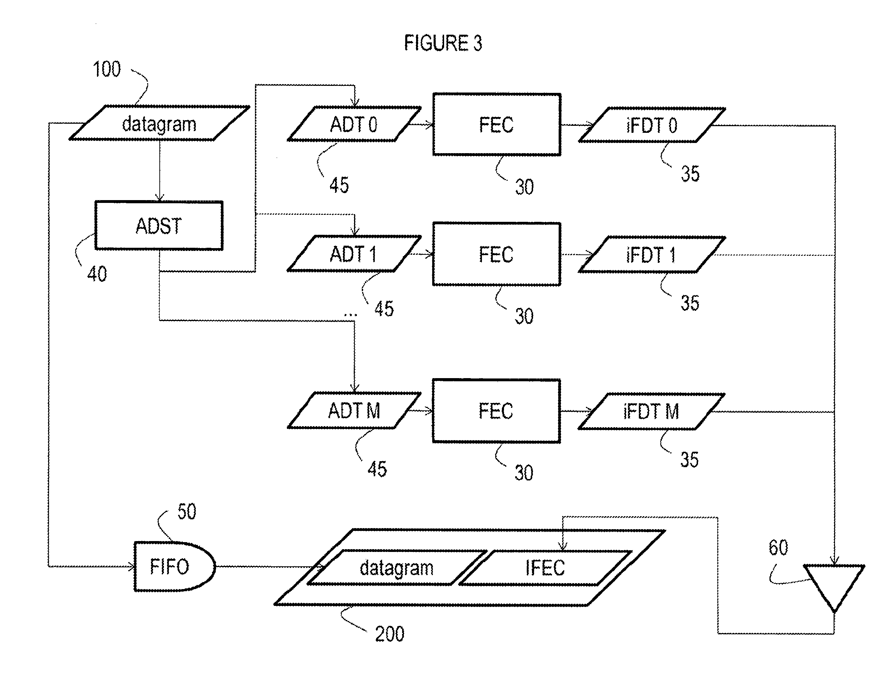

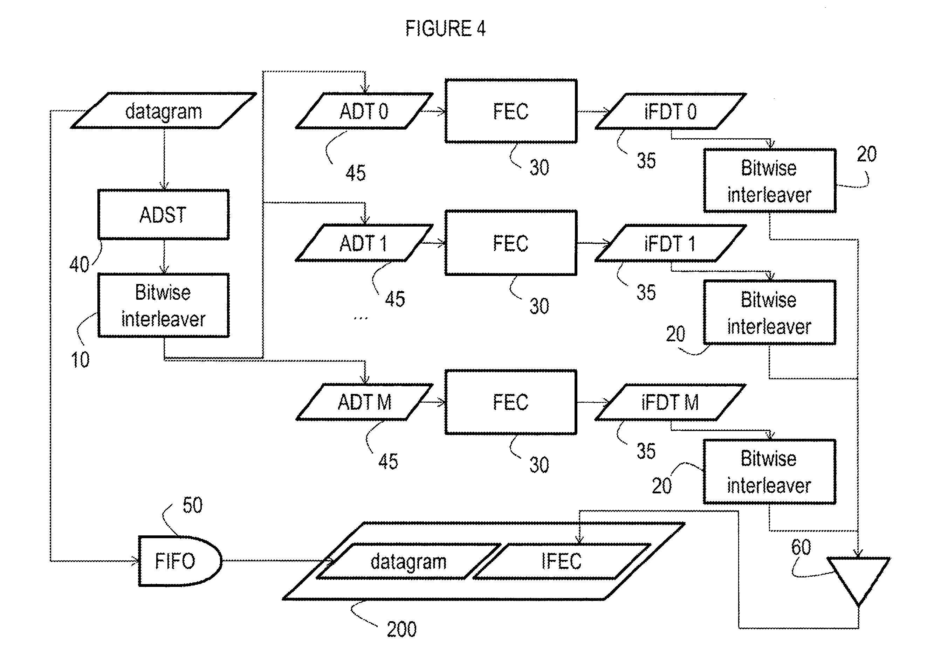

The general structure of a DVB-SH system is illustrated in Figure 3. Datagrams (100) provided by the application layer are mapped by the Application Data Sub-Table function (40) upon a number of Application Data Tables (45). These Application Data Tables (45) serve as input to the parallel Forward Error Correction coding agents (30). The resulting redundancy information is stored in iFEC Data Tables (35). Columns from different iFEC Data Tables (35) are assembled (60) and combined with the datagram (100), optionally delayed by a buffer (50), to form a time-slice burst (200) for transmission over the medium. Figure 4 illustrates the application of the present invention to the DVB-SH architecture illustrated in Figure 3. Such an embodiment additionally comprises a first binary interleaving agent (10) adapted to rearrange transmission data (40) with a single-bit granularity and a second binary interleaving agent (20) adapted to rearrange redundancy information (35) pertaining to said transmission data (40) with a single-bit granularity.

The bit-wise interleaving process of the present invention may operate on an ADST (40). To enjoy the benefit of additional time diversity, the bit-wise interleaving process can be applied across a block of multiple ADSTs. Alternatively, the bit-wise interleaving process of the present invention may operate on an ADT (45). In communication systems that do not order data in ADTs or ADSTs, the bitwise interleaving process of the present invention may operate on any equally suitable collection of data.

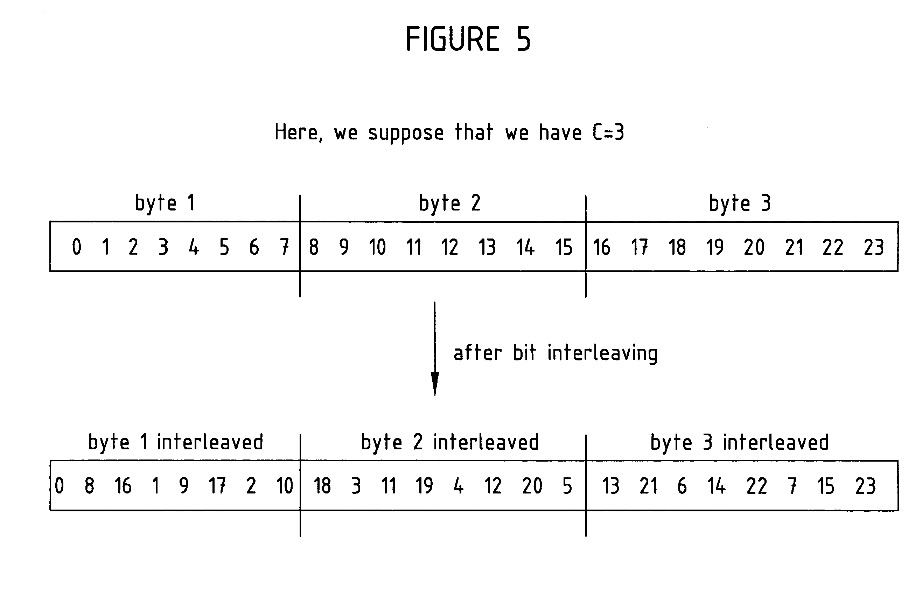

The result of applying the binary interleaving formulas described above to data bits or redundancy information is illustrated in an exemplary way in Figure 5. There, a hypothetical case with C=3 (or, equivalently, F=3) is illustrated. The top part of Figure 5 illustrates the original positions of the input bit columns, numbered 0 through 23 for convenience. The bottom part of Figure 5 illustrates the positions of the same bit columns after applications of the formula. The byte boundaries are shown as vertical separation lines, to indicate that the total number of byte columns is unaffected.

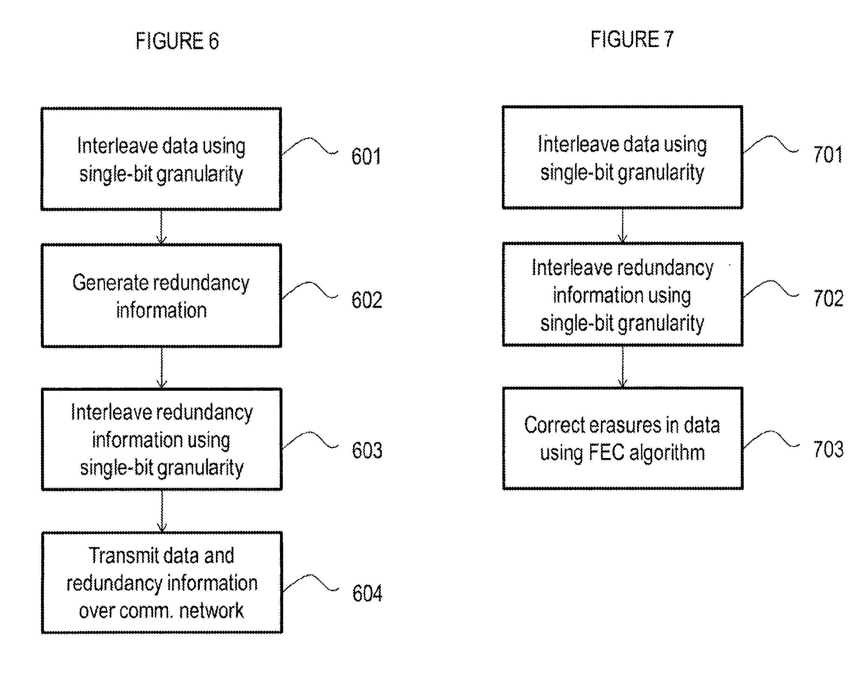

Figure 6 illustrates an embodiment of the method for generating redundancy information related to data to be transmitted. The steps of bit-wise data interleaving (601), generating redundancy information (602), and redundancy information interleaving (603) are shown, as well as an optional step of transmitting the data and redundancy information over a communication network (604).

Figure 7 illustrates an embodiment of the method for correcting erasures in received data. Although the steps of rearranging the received data (701) and rearranging received redundancy information pertaining to the received data (702) are shown sequentially, other embodiments may execute these steps simultaneously or in a different order. Figure 7 further shows the step of correcting (703) erasures in the received data by applying a forward error correction algorithm to the rearranged received data using the rearranged redundancy information.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for generating redundancy information related to data to be transmitted in a DVB-SH system using multi-protocol encapsulation with an inter-burst forward error correction algorithm, the method comprising rearranging (601) said data by interleaving it; generating (602) redundancy information pertaining to said interleaved data by means of said forward error correction algorithm; and rearranging (603) said redundancy information by interleaving it, **characterized in that** said interleaving (601, 603) is performed using single-bit granularity, said interleaving (601, 603) being applied to a data table containing said data or said redundancy information, in which every byte column is treated as a set of 8 bit columns with index $c_i$ and by expressing each byte in binary form, and **in that** at least one of said rearranging (601) of said amount of data and said rearranging (603) of said redundancy information is conducted by transforming a table comprising C columns of said byte-sized data or redundancy information as follows: $c'_t = 8nc_i \bmod (8C - 1)$, where $c_i$ is the original bit column index, $c'_i$ is the new bit column index, and n is a positive integer multiplier.

2. The method of claim 1, where said forward error correction algorithm is a Reed-Solomon algorithm.

3. The method of any of the preceding claims, further comprising transmitting (604) said data and said interleaved redundancy information over a communication network.

4. A method for performing error correction, comprising the method of claim 3, and further comprising:

    receiving said transmitted data and said transmitted interleaved redundancy information from a channel susceptible to frame loss;
    rearranging (701) said received data by interleaving it;
    rearranging (702) said received redundancy information pertaining to said received data by interleaving it; and
    correcting (703) erasures in said received data by applying a binary-based forward error correction algorithm to said rearranged received data using said rearranged redundancy data;
    wherein said interleaving (701, 702) is performed using single-bit granularity, said interleaving (701, 702) being applied to a data table containing said data or said redundancy information, in which every byte column is treated as a set of 8 bit columns by expressing each byte in binary form.

5. A method for correcting erasures in data received in a DVB-SH system using multi-protocol encapsulation with an inter-burst forward error correction algorithm, the method comprising rearranging (701) said received data by interleaving it;

rearranging (702) received redundancy information pertaining to said received data by interleaving it; and correcting (703) erasures in said received data by applying said forward error correction algorithm to said rearranged received data using said rearranged redundancy information

**characterized in that** said interleaving (701, 702) is performed using single-bit granularity, said said interleaving (701, 702) being applied to a data table containing said data or said redundancy information, in which every byte column is treated as a set of 8 bit columns with index $c_i$ and by expressing each byte in binary form,

and **in that** at least one of said rearranging (701) of said amount of data and said rearranging (702) of said redundancy information is conducted by transforming a table comprising C columns of said byte-sized data or redundancy information as follows: $c'_i = 8nc_i \bmod (8C - 1)$, where $c_i$ is the original bit column index, $c'_i$ is the new bit column index, and n is a positive integer multiplier.

6. The method of claim 5, wherein said forward error correction algorithm is a parity check matrix based sum-product Reed-Solomon decoding algorithm.

7. The method of any of the preceding claims, wherein said data pertains to a number of frames.

8. A system for using or generating redundancy information related to received or transmitted data, respectively, in a DVB-SH system using multi-protocol encapsulation with an inter-burst forward error correction algorithm, the system comprising

a first interleaving agent (10) adapted to rearrange said data;

a second interleaving agent (20) adapted to rearrange redundancy information pertaining to said data; and, an agent (30) for processing said rearranged data by means of said forward error correction algorithm, thereby respectively using or generating said redundancy information,

**characterized in that** said first interleaving agent (10) is adapted to rearrange said data with single-bit granularity, said first interleaving agent (10) being configured to operate on a data table containing said data, in which every byte column is treated as a set of 8 bit columns with index ci and by expressing each byte in binary form, **in that** said second interleaving agent (20) is adapted to rearrange said redundancy information with single-bit granularity, said second interleaving agent (20) being configured to operate on a data table containing said redundancy information, in which every byte column is treated as a set of 8 bit columns with index ci and by expressing each byte in binary form,

and **in that** at least one of said first interleaving agent and said second interleaving agent is adapted to apply the following interleaving formula to a table comprising C columns of said byte-sized data or redundancy information:

$$c'_i = 8nc_i \bmod (8C - 1), \text{ where } c_i \text{ is the original bit column}$$

where $c_i$ is the original bit column index, $c'_i$ is the new bit column index, and $n$ is a positive integer multiplier.

9. The system of claim 8, where said forward error correction algorithm is a parity check matrix based sum-product Reed-Solomon decoding algorithm.

10. The system of any of claims 8 through 9, adapted to operate on data framed according to a frame-based communication protocol, wherein said data comprises data pertaining to a number of frames.

11. The system of any of claims 8 through 10, adapted to transmit or receive said data over a Digital Video Broadcast link.

12. The system of claim 11, wherein said first binary interleaving agent (10) is adapted to operate on one or more Application Data Sub-Tables (40), and said second binary interleaving agent (20) is adapted to operate on one or more IFEC Data Tables (35).

**Patentansprüche**

1. Verfahren für das Generieren von Redundanzinformationen, die Daten zugeordnet sind, die in einem DVB-SH-System unter Verwendung von Multiprotokoll-Verkapselung übertragen werden, mit einem Interburst-Vorwärtsfehlerkorrekturalgorithmus, wobei das Verfahren umfasst:

Umgruppierung (601) besagter Daten durch Verschachtelung;

Generieren (602) von Redundanzinformationen, die zu besagten verschachtelten Daten gehören, mittels besagtem Vorwärtsfehlerkorrekturalgorithmus; und

Umgruppierung (603) besagter Redundanzinformationen durch Verschachtelung;

**dadurch gekennzeichnet, dass** besagtes Verschachteln (601, 603) unter Verwendung einer Einzelbit-Granularität ausgeführt wird, wobei besagtes Verschachteln (601, 603) auf eine besagte Daten oder besagte Redundanzinformationen enthaltende Datentabelle angewendet wird, in der jede Byte-Spalte als Satz von 8-Bit-Spalten mit dem Index $c_i$ behandelt wird, dabei jedes Byte in binärischer Form ausdrückend,

und **dadurch gekennzeichnet, dass** mindestens eine besagter Umgruppierungen, besagte Umgruppierung (601) besagter Datenmenge oder besagte Umgruppierung (603) besagter Redundanzinformationen, ausgeführt wird durch die Umwandlung einer C Spalten umfassenden Tabelle besagter in Byte bemessener Daten oder Redundanzinformationen nach folgender Formel: $c'_i = 8nc_i \bmod (8C - 1)$, wobei ci der Original-Bit-Spaltenindex und n ein Multiplikator in Form einer positiven ganzen Zahl ist.

2. Verfahren nach Anspruch 1, wobei besagter Vorwärtsfehlerkorrekturalgorithmus ein Reed-Solomon-Algorithmus ist.

3. Verfahren nach einem beliebigen der vorstehenden Ansprüche, weiterhin umfassend:

das Übermitteln (604) besagter Daten und besagter verschachtelter Redundanzinformationen über ein Kommunikationsnetzwerk.

4. Verfahren für das Ausführen einer Fehlerkorrektur, das Verfahren aus Anspruch 3 und weiterhin Folgendes umfassend:

Empfangen besagter übermittelter Daten und besagter übertragener, verschachtelter Redundanzinformationen über einen Kanal, der anfällig für Rahmenverlust ist;

Umgruppierung (701) besagter empfangener Daten durch Verschachtelung;

Umgruppierung (702) durch Verschachteln besagter empfangener Redundanzinformationen, die zu besagten empfangenen Daten gehören; und

Korrigieren (703) von Löschungen in besagten empfangenen Daten durch die Anwendung eines auf binärer Codierung basierenden Vorwärtsfehlerkorrekturalgorithmus auf die umgruppierten empfangenen Daten unter Verwendung besagter umgruppierter Redundanzdaten;

wobei besagtes Verschachteln (701, 702) unter Verwendung einer Einzelbit-Granularität ausgeführt wird, wobei besagtes Verschachteln (701, 702) auf eine besagte Daten oder besagte Redundanzinformationen enthaltende Datentabelle angewendet wird, in der jede Byte-Spalte als Satz von 8-Bit-Spalten behandelt wird, dabei jedes Byte in binärischer Form ausdrückend.

5. Verfahren für das Korrigieren von Löschungen bei Daten, die in einem DVB-SH-System unter Verwendung von Multiprotokoll-Verkapselung empfangen werden, mit einem Interburst-Vorwärtsfehlerkorrekturalgorithmus, wobei das Verfahren umfasst:

Umgruppierung (701) besagter empfangener Daten durch Verschachtelung;

Umgruppierung (702) durch Verschachteln empfangener Redundanzinformationen, die zu besagten empfangenen Daten gehören; und

Korrigieren (703) von Löschungen in besagten empfangenen Daten durch die Anwendung von besagtem Vorwärtsfehlerkorrekturalgorithmus auf die umgruppierten empfangenen Daten unter Verwendung besagter umgruppierter Redundanzinformationen

**dadurch gekennzeichnet, dass** besagtes Verschachteln (701, 702) unter Verwendung einer Einzelbit-Granularität ausgeführt wird, wobei besagtes Verschachteln (701, 702) auf eine besagte Daten oder besagte Redundanzinformationen enthaltende Datentabelle angewendet wird, in der jede Byte-Spalte als Satz von 8-Bit-Spalten mit dem Index $c_i$ behandelt wird, dabei jedes Byte in binärischer Form ausdrückend,

und **dadurch gekennzeichnet, dass** mindestens eine besagter Umgruppierungen, besagte Umgruppierung (701) besagter Datenmenge oder besagte Umgruppierung (702) besagter Redundanzinformationen, ausgeführt wird durch die Umwandlung einer C Spalten umfassenden Tabelle besagter in Byte bemessener Daten oder Redundanzinformationen nach folgender Formel: $c'_i = 8nc_i \bmod (8C - 1)$, wobei $c_i$ der Original-Bit-Spaltenindex, $c'_i$ der neue Bit-Spaltenindex und n ein Multiplikator in Form einer positiven ganzen Zahl ist.

6. Verfahren nach Anspruch 5, wobei besagter Vorwärtsfehlerkorrekturalgorithmus ein matrixbasierter Reed-Solomon- und Sum-Product-Dekodieralgorithmus für Paritätskontrollen ist.

7. Verfahren nach einem beliebigen der vorstehenden Ansprüche, wobei besagte Daten einer Anzahl von Rahmen gehören.

8. System für das Benutzen oder Generieren von Redundanzinformationen, die je nach Fall empfangenen oder übertragenen Daten zugeordnet sind, die in einem DVB-SH-System unter Verwendung von Multiprotokoll-Verkapselung übertragen werden, mit einem Interburst-Vorwärtsfehlerkorrekturalgorithmus, wobei das System umfasst:

einen ersten Verschachtelungsagenten (10), ausgelegt für die Umgruppierung besagter Daten;
einen zweiten Verschachtelungsagenten (20), ausgelegt für die Umgruppierung von zu besagten Daten gehörenden Redundanzinformationen; und
einen Agenten (30) für die Verarbeitung besagter umgruppierter Daten mittels besagten Vorwärtsfehlerkorrekturalgorithmus, dabei je nach Fall besagte Redundanzinformationen benutzend oder generierend,
**dadurch gekennzeichnet, dass** besagter erster Verschachtelungsagent (10) ausgelegt ist für die Umgruppierung besagter Daten mit Einzelbit-Granularität,
wobei besagter erster Verschachtelungsagent (10) konfiguriert ist für die Bearbeitung einer besagte Daten enthaltenden Datentabelle, in der jede Byte-Spalte als Satz von 8-Bit-Spalten mit dem Index $c_i$ behandelt wird, dabei jedes Byte in binärischer Form ausdrückend,
**dadurch gekennzeichnet, dass** besagter zweiter Verschachtelungsagent (20) ausgelegt ist für die Umgruppierung besagter Redundanzinformationen mit Einzelbit-Granularität, wobei besagter zweiter Verschachtelungsagent (20) konfiguriert ist für die Bearbeitung einer besagte Redundanzinformationen enthaltenden Datentabelle, in der jede Byte-Spalte als Satz von 8-Bit-Spalten mit dem Index $c_i$ behandelt wird, dabei jedes Byte in binärischer Form ausdrückend, sowie **dadurch gekennzeichnet, dass** mindestens einer der beiden Verschachtelungsagenten, besagter erster Verschachtelungsagent oder besagter zweiter Verschachtelungsagent, ausgelegt ist für die Anwendung der folgenden Verschachtelungsformel auf eine Tabelle mit C Spalten besagter in Byte bemessener Daten oder Redundanzinformationen:

$$c'_i = 8nc_i \bmod (8C - 1),$$ wobei $c_i$ der Original-Bit-Spaltenindex, $c'_i$ der neue Bit-

wobei $c_i$ der Original-Bit-Spaltenindex, $c'_i$ der neue Bit-Spaltenindex und n ein Multiplikator in Form einer positiven ganzen Zahl ist.

9. System nach Anspruch 8, wobei besagter Vorwärtsfehlerkorrekturalgorithmus ein matrixbasierter Reed-Solomon- und Sum-Product-Dekodieralgorithmus für Paritätskontrollen ist.

10. System nach einem beliebigen der Ansprüche 8 bis 9, ausgelegt für die Anwendung auf nach einem rahmenbasierten Kommunikationsprotokoll gerahmten Daten, wobei besagte Daten Daten umfassen, die zu einer Anzahl von Rahmen gehören.

11. System nach einem beliebigen der Ansprüche 8 bis 10, ausgelegt für das Übermitteln oder Empfangen besagter Daten über einen Digitalfernseh-Link.

12. Das System nach Anspruch 11, wobei besagter erster binärer Verschachtelungsagent (10) ausgelegt ist für die Anwendung auf eine oder mehrere Anwendungsdaten-Untertabellen (40) und besagter zweiter binärer Verschachtelungsagent (20) für die Anwendung auf eine oder mehrere IFEC-Datentabellen (35).

**Revendications**

1. Procédé pour générer des informations de redondance en rapport avec des données à émettre dans un système DVB-SH en utilisant une encapsulation multiprotocolaire avec un algorithme de correction d'erreur directe entre les rafales, le procédé comprenant les étapes suivantes :

réorganiser (601) lesdites données en les entrelaçant ;
générer (602) les informations de redondance se rapportant auxdites données entrelacées au moyen dudit algorithme de correction d'erreur directe ; et

réorganiser (603) lesdites informations de redondance en les entrelaçant,

**caractérisé en ce que** ladite opération consistant à entrelacer (601, 603) est effectuée en utilisant une granularité à bit unique, ladite opération consistant à entrelacer (601, 603) étant appliquée à un tableau de données contenant lesdites données ou lesdites informations de redondance dans lequel chaque colonne d'octets est considérée comme un ensemble de 8 colonnes de bits avec un index $c_i$ et en exprimant chaque octet sous sa forme binaire,

et **en ce qu'**au moins l'une desdites opérations consistant à réorganiser (601) ladite quantité de données et à réorganiser (603) lesdites informations de redondance est réalisée en transformant un tableau contenant C colonnes desdites données ou informations de redondance de la taille d'un octet comme suit : $c'_i = 8nc_i \mod(8C-1)$, où $c_i$ désigne l'index de la colonne de bits originale, $c'_i$ est l'index de la nouvelle colonne de bits et n est un multiplicateur entier positif.

2. Procédé selon la revendication 1, selon lequel ledit algorithme de correction d'erreur directe est un algorithme de Reed-Solomon.

3. Procédé selon l'une quelconque des revendications précédentes, comprenant en outre l'état consistant à émettre (604) lesdites données et lesdites informations de redondance sur un réseau de communication.

4. Procédé de réalisation d'une correction d'erreur, comprenant le procédé selon la revendication 3, et comprenant en outre les étapes suivantes :

   recevoir lesdites données émises et lesdites informations de redondance entrelacées de la part d'un canal sensible à la perte de trame ;

   réorganiser (701) lesdites données reçues en les entrelaçant ;

   réorganiser (702) lesdites informations de redondance reçues se rapportant auxdites données reçues en les entrelaçant ; et

   corriger (703) les suppressions dans lesdites données reçues en appliquant un algorithme de correction d'erreur directe binaire auxdites données reçues réorganisées en utilisant lesdites données de redondance réorganisées ;

   ladite opération consistant à réorganiser (701, 702) étant effectuée en utilisant une granularité à bit unique, ladite opération consistant à entrelacer (701, 702) étant appliquer à un tableau de données contenant lesdites données ou lesdites informations de redondance dans lequel chaque colonne d'octets est considérée comme un ensemble de 8 colonnes de bits en exprimant chaque octet sous sa forme binaire.

5. Procédé de correction des suppressions dans les données reçues dans un système DVB-SH en utilisant une encapsulation multiprotocolaire avec un algorithme de correction d'erreur directe entre les rafales, le procédé comprenant les étapes suivantes :

   réorganiser (701) lesdites données reçues en les entrelaçant ;

   réorganiser (702) lesdites informations de redondance reçues se rapportant auxdites données reçues en les entrelaçant ; et

   corriger (703) les suppressions dans lesdites données reçues en appliquant ledit algorithme de correction d'erreur directe binaire auxdites données reçues réorganisées en utilisant lesdites informations de redondance réorganisées,

   **caractérisé en ce que** ladite opération consistant à entrelacer (701, 702) est effectuée en utilisant une granularité à bit unique, ladite opération consistant à entrelacer (701, 702) étant appliquée à un tableau de données contenant lesdites données ou lesdites informations de redondance dans lequel chaque colonne d'octets est considérée comme un ensemble de 8 colonnes de bits avec un index $c_i$ et en exprimant chaque octet sous sa forme binaire,

   et **en ce qu'**au moins l'une desdites opérations consistant à réorganiser (701) ladite quantité de données et à réorganiser (702) lesdites informations de redondance est réalisée en transformant un tableau contenant C colonnes desdites données ou informations de redondance de la taille d'un octet comme suit : $c'_i = 8nc_i \mod(8C-1)$, où $c_i$ désigne l'index de la colonne de bits originale, $c'_i$ est l'index de la nouvelle colonne de bits et n est un multiplicateur entier positif.

6. Procédé selon la revendication 5, selon lequel ledit algorithme de correction d'erreur directe est un algorithme de Reed-Solomon à somme-produit basé une matrice de contrôle de parité.

**7.** Procédé selon l'une quelconque des revendications précédentes, selon lequel lesdites données se rapportent à un certain nombre de trames.

**8.** Système destiné à utiliser ou à générer des informations de redondance respectivement en rapport avec des données reçues ou émises, dans un système DVB-SH en utilisant une encapsulation multiprotocolaire avec un algorithme de correction d'erreur directe entre les rafales, le système comprenant :

un premier agent d'entrelacement (10) adapté pour réorganiser lesdites données ;

un deuxième agent d'entrelacement (20) adapté pour réorganiser les informations de redondance se rapportant auxdites données ; et

un agent (30) pour traiter lesdites données réorganisées au moyen dudit algorithme de correction d'erreur directe en utilisant ou en générant ici lesdites informations de redondance,

**caractérisé en ce que** ledit premier agent d'entrelacement (10) est adapté pour réorganiser lesdites données avec une granularité à bit unique, ledit premier agent d'entrelacement (10) étant configuré pour opérer sur un tableau de données contenant lesdites données, dans lequel chaque colonne d'octets est considérée comme un ensemble de 8 colonnes de bits avec un index $c_i$ et en exprimant chaque octet sous sa forme binaire,

**en ce que** ledit deuxième agent d'entrelacement (20) est adapté pour réorganiser lesdites informations de redondance avec une granularité à bit unique, ledit deuxième agent d'entrelacement (20) étant configuré pour opérer sur un tableau de données contenant lesdites informations de redondance, dans lequel chaque colonne d'octets est considérée comme un ensemble de 8 colonnes de bits avec un index $c_i$ et en exprimant chaque octet sous sa forme binaire,

et **en ce qu'**au moins l'un parmi ledit premier agent d'entrelacement et ledit deuxième agent d'entrelacement est adapté pour appliquer la formule d'entrelacement suivante à un tableau contenant C colonnes desdites données ou informations de redondance de la taille d'un octet comme suit : $c'_i = 8nc_i \bmod(8\,C-1)$, où $c_i$ désigne l'index de la colonne de bits originale, $c'_i$ est l'index de la nouvelle colonne de bits et n est un multiplicateur entier positif.

**9.** Système selon la revendication 8, selon lequel ledit algorithme de correction d'erreur directe est un algorithme de Reed-Solomon à somme-produit basé une matrice de contrôle de parité.

**10.** Système selon l'une quelconque des revendications 8 à 9, adapté pour opérer sur des données mises en trames conformément à un protocole de communication par trames, lesdites données contenant des données en rapport à un certain nombre de trames.

**11.** Système selon l'une quelconque des revendications 8 à 10, adapté pour émettre ou recevoir lesdites données sur une liaison de diffusion vidéo numérique.

**12.** Système selon la revendication 11, avec lequel ledit premier agent d'entrelacement binaire (10) est adapté pour opérer sur un ou plusieurs sous-tableaux de données d'application (40), et ledit deuxième agent d'entrelacement binaire (20) est adapté pour opérer sur un ou plusieurs tableaux de données IFEC (35).

FIGURE 1

FIGURE 2

FIGURE 3

EP 2 264 931 B1

# FIGURE 4

EP 2 264 931 B1

## FIGURE 5

Here, we suppose that we have C=3

| byte 1 | | | | | | | | byte 2 | | | | | | | | byte 3 | | | | | | | |
|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |

after bit interleaving →

| byte 1 interleaved | | | | | | | | byte 2 interleaved | | | | | | | | byte 3 interleaved | | | | | | | |
|---|---|---|---|---|---|---|---|---|---|---|---|---|---|---|---|---|---|---|---|---|---|---|---|
| 0 | 8 | 16 | 1 | 9 | 17 | 2 | 10 | 18 | 3 | 11 | 19 | 4 | 12 | 20 | 5 | 13 | 21 | 6 | 14 | 22 | 7 | 15 | 23 |

## FIGURE 6

| Interleave data using single-bit granularity | — 601 |

↓

| Generate redundancy information | — 602 |

↓

| Interleave redundancy information using single-bit granularity | — 603 |

↓

| Transmit data and redundancy information over comm. network | — 604 |

## FIGURE 7

| Interleave data using single-bit granularity | — 701 |

↓

| Interleave redundancy information using single-bit granularity | — 702 |

↓

| Correct erasures in data using FEC algorithm | — 703 |

EP 2 264 931 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J. JIANG ; KR NARAYANAN.** Iterative soft decision decoding of Reed Solomon codes based on adaptive parity check matrices. *Proceedings of the International Symposium on Information Theory,* 2004